**Europäisches Patentamt**

**European Patent Office**

**Office européen des brevets**

(19)

(11) Veröffentlichungsnummer: **0 385 075**
**A2**

(12) # EUROPÄISCHE PATENTANMELDUNG

(21) Anmeldenummer: **90100781.5**

(51) Int. Cl.⁵: **H04J 3/16**

(22) Anmeldetag: **16.01.90**

(30) Priorität: **02.03.89 DE 3906541**

(43) Veröffentlichungstag der Anmeldung:
**05.09.90 Patentblatt 90/36**

(84) Benannte Vertragsstaaten:
**DE FR GB IT**

(71) Anmelder: **ANT Nachrichtentechnik GmbH**
**Gerberstrasse 33**
**D-7150 Backnang(DE)**

(72) Erfinder: **Ehrlich, Wolfgang, Dipl.-Ing.**
**Sonnenhalde 30**
**D-7151 Allmersbach im Tal(DE)**

(54) **Verfahren zur digitalen Nachrichtenübertragung.**

(57)
2.1 In den bestehenden digitalen Netzen existieren zwei unterschiedliche Standards, die europäische und die nordamerikanische asynchrone Hierarchie. Diese werden in den neuen synchronen Netzstandard eingebunden. Die synchrone digitale Hierarchie definiert ein Digitalsignal mit 155,520 Mbit/s, das in einem byteorientierten Rahmen mit einer Rahmenfrequenz von 8 kHz übertragen wird. Ein Verefahren zur digitalen Nachrichtenübertragung von Signalen der drei Standards mit geringerer Bitrate ist anzugeben.

2.2 Das erfindungsgemäße Verfahren verwendet einen Rahmen aus 9 Teilrahmen, der mit einer Rahmenfrequenz von 8 kHz übertragen wird, byteorientiert ist und eine Übertragungskapazität von 39,168 Mbit/s aufweist, oder Überrahmen aus solchen Rahmen. Der Rahmen berücksichtigt die 9 Zeilen-Struktur des Rahmens des STM-1-Signals, indem Overhead von einem Byte Länge neunmal äquidistant über den Rahmen verteilt vorgesehen ist.

2.3 Nachrichtenübertragung

Fig. 1

EP 0 385 075 A2

## Verfahren zur digitalen Nachrichtenübertragung

Die Erfindung betrifft ein Verfahren zur digitalen Nachrichtenübertragung nach dem Oberbegriff des Patentanspruches 1.

In den bestehenden digitalen Netzen existieren zwei unterschiedliche Netzstandards, die europäische asynchrone Hierarchie die auf einer Bitrate von 2,048 Mbit/s aufbaut und die nordamerikanische Hierarchie, die als Basis 1,544 Mbit/s verwendet. Eine neue synchrone digitale Hierarchie wird in "Die neue synchrone digitale Hierarchie" von W. Ehrlich und K. Eberspächer in ntz Bd. 41 (1988), Heft 10, S. 570-574 beschrieben. Die bestehenden asynchronen Hierarchien werden in den neuen synchronen Netzstandard eingebunden. Die synchrone digitale Hierarchie definiert ein Digitalsignal STM-1 (Synchrones Transport-Modul), dessen Bitrate 155,520 Mbit/s beträgt. Der Rahmenaufbau ist byteorientiert. Der Rahmen des STM-1-Signals wird mit einer Rahmenfrequenz von 8 kHz übertragen. Das STM-1-Signal enthält Virtuelle Container unterschiedlicher Übertragungskapazitäten. Die Virtuellen Container enthalten die zu übertragende Information. Das STM-1-Signal stellt an die digitale Schaltungslogik aufgrund seiner hohen Bitrate große Anforderungen hinsichtlich deren Verarbeitungsgeschwindigkeit.

Ausgehend von diesem Stand der Technik ist es Aufgabe der Erfindung ein Verfahren zur digitalen Nachrichtenübertragung anzugeben, das eine Übertragung von Signalen unterschiedlicher Hierarchiestufen der europäischen oder nordamerikanischen asynchronen Hierarchie, sowie der synchronen digitalen Hierarchie (Virtuelle Container) auf einfache Weise ermöglicht.

Diese Aufgabe wird durch ein Verfahren zur digitalen Nachrichtenübertragung mit den Merkmalen des Patentanspruches 1 gelöst.

Eine vorteilhafte Weiterbildung ist im Unteranspruch angegeben.

Das erfindungsgemäße Verfahren wird mittels eines Rahmens aus 9 Teilrahmen durchgeführt, dessen Bitrate etwa einem Viertel der Bitrate des STM-1-Signals entspricht. Dadurch wird das Signal leichter handhabbar im Rahmen der technologischen Möglichkeiten. Der verwendete Rahmen ist byteorientiert, wird mit einer Rahmenfrequenz von 8 kHz übertragen und weist eine Bitrate von 39,168 Mbit/s auf. Die Teilrahmen weisen eine Länge von 68 Byte und eine Frequenz von 72 kHz auf. Der Rahmen berücksichtigt die 9 Zeilen-Struktur des Rahmens des STM-1-Signals, indem Worte mit Overhead mit einer Länge von je einem Byte neunmal äquidistant über den Rahmen verteilt oder in jedem Teilrahmen einmal an fester Stelle auftauchen. Mit Overhead werden dabei alle Worte bezeichnet, die keine Nutzinformation enthalten wie beispielsweise Rahmensynchronworte, Statusworte oder Kennungsworte. Die Zahl der Rahmensynchronworte pro Rahmen oder Überrahmen kann zwischen 1 und 9 bzw. N und 9 • N gewählt werden, wobei eine größere Anzahl bessere Möglichkeiten zur Synchronisation und höhere Sicherheit bei der Synchronisation bedeuten. Der Rahmen ist mit dem des STM-1-Signals kompatibel. Der Rahmen ist in Zeit-Raum-Zeit-Koppelfeldern zum Schalten von Digitalsignalen der ersten Hierarchiestufe, aber auch von Digitalsignalen der zweiten und dritten Hierarchiestufe verwendbar. Die Übertragungskapazität des Rahmens ist ausreichend zum Transport eines Digitalsignals der dritten Hierarchiestufe der asynchronen digitalen Hierarchie (Bitrate: 34 368 kbit/s), aber auch ausreichend für einen Virtuellen Container (VC-31) der dritten Hierarchiestufe der synchronen digitalen Hierarchie (Bitrate: 37 248 kbit/s). Es können auch Überrahmen aus N • 9 Teilrahmen bzw. N Rahmen gebildet werden. Die Größe der Überrahmen beträgt N • 612 byte, die Rahmenfrequenz (8000/N) Hz. Die Überrahmenbildung ist beispielsweise zur Übertragung von Virtuellen Containern der unteren Hierarchiestufe mit einer Rahmenfrequenz von 2 kHz sinnvoll.

Ein Ausführungsbeispiel des erfindungsgemäßen Verfahrens wird anhand der Zeichnung erläutert. Es zeigen

Figur 1 Räumliche Darstellung des verwendeten Rahmens.

Figur 2 Tabellarische Zusammenstellung der mit dem Verfahren übertragbaren Signale.

Figur 3 Räumliche Darstellung der Unterbringung je eines Virtuellen Containers VC-12 und VC-22 im verwendeten Rahmen.

Figur 4 Räumliche Darstellung der Unterbringung eines Virtuellen Containers VC-31 im verwendeten Rahmen.

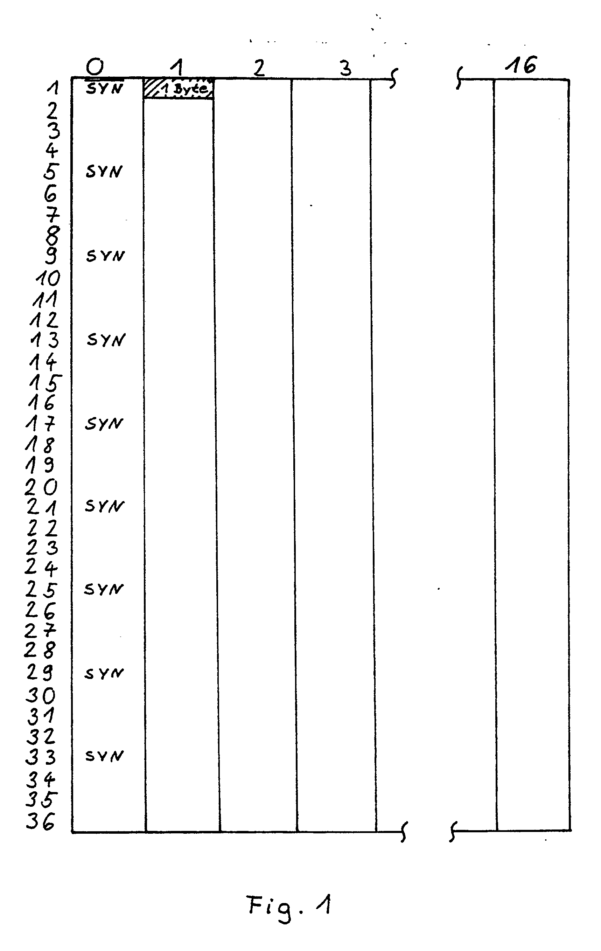

Anhand der Figur 1 wird der vom erfindungsgemäßen Verfahren verwendete Rahmen erläutert. Die kleinste Einheit des Rahmens ist ein Byte, wie oben links in der Figur angedeutet ist. Da die Rahmenfrequenz 8 kHz beträgt stellt ein Byte einen Zeitabschnitt mit einer Übertragungskapazität von 64 kbit/s dar. Der Rahmen ist als matrixartige Struktur mit 17 Spalten und 36 Zeilen, also 17x36 = 612 Zeitabschnitten von je einem Byte, also insgesamt 4896 bit und demzufolge von insgesamt 39 168 kbit/s, dargestellt. Eine Spalte bildet einen Zeitkanal von 36x64 = 2304 kbit/s. In der ersten Spalte befinden sich in jeder 4. Zeile begonnen mit der 1. Zeile des Rahmens Worte zur Rahmensynchronisation. Die weiteren Zeitabschnitte der ersten Spalte können je nach Bedarf mit Überrahmenindikatoren, Pointern, Stopfstellen oder Informationsbytes angefüllt werden.

Matrixstrukturen mit 34 Spalten und 18 Zeilen oder 68 Spalten und 9 Zeilen sind ebenfalls möglich.

In Figur 1 unterscheidet sich das Synchronwort $\overline{SYN}$ in der ersten Zeile von den weiteren Synchronworten SYN.

Die Übertragung des dargestellten Rahmens erfolgt zeilenweise, wodurch die Matrixstruktur verloren geht und ein Rahmen mit 612 aufeinanderfolgenden Zeitabschnitten entsteht, die durch die 9 Worte zur Rahmensynchronisation in 9 gleich große Teile geteilt werden.

In dem angegebenen Rahmen kann man nun verschiedene Signale der asynchronen Hierarchie und der synchronen Hierarchie übertragen. Dazu werden ein oder mehrere der 17 Zeitschlitze benötigt, oder das Unterbringen erfolgt statisch. Die Zahl der benötigten Signalpfade hängt von der Bitrate der zu übertragenden Signale ab. Ist die Bitrate größer als die Übertragungskapazität des Rahmens, so muß das Signal auf mehrere Signalpfade verteilt werden.

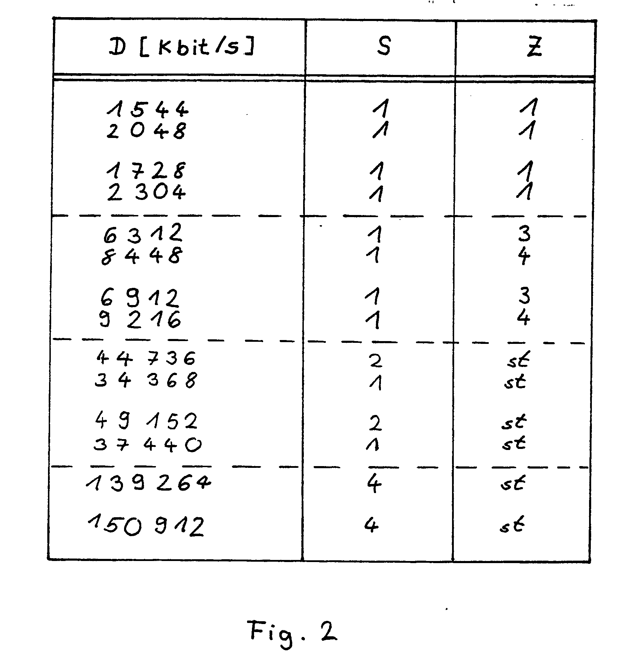

In Figur 2 ist anhand einer Tabelle dargestellt, welche Signale mit welchen Übertragungsraten D im Rahmen unter Ausnutzung von wievielen Zeitkanälen Z und mit wievielen benötigten Signalpfaden S untergebracht werden können. Die verschiedenen Hierarchiestufen sind durch waagerechte gestrichelte Linien voneinander getrennt. Die beiden oberen Signale einer Hierarchiestufe gehören zu den asynchronen Standards (ganz oben die nordamerikanische, dann die europäische Hierarchie), die beiden unteren zum synchronen Standard. In der vierten Hierarchiestufe existiert kein Datensignal des nordamerikanischen Standards. Man erkennt sofort, daß nur in den ersten beiden Hierarchiestufen das Koppelfeld dynamisch (also mit Zeitstufen) betrieben wird. Ansonsten findet der Betrieb statisch statt, was in der Tabelle mit st angedeutet ist. Die Datensignale der ersten Hierarchiestufe können in einen Zeitkanal mit 2304 kbit/s übertragen werden. Die Datensignale der zweiten Hierarchiestufe werden auf einem Signalpfad in mehreren Zeitkanälen übertragen. Das Signal mit der größten Übertragungskapazität, das auf einem Signalpfad übertragen werden kann, ist das sychrone Digitalsignal mit 37440 kbit/s. Für die Signale der dritten Hierarchiestufe werden teilweise schon 2 Signalpfade benötigt, für die Signale der 4. Hierarchiestufe sind 4 Signalpfade nötig.

In den nun folgenden Beispielen wird gezeigt, wie verschiedene Digitalsignale in dem vom erfindungsgemäßen Verfahren verwendeten Rahmen untergebracht werden können.

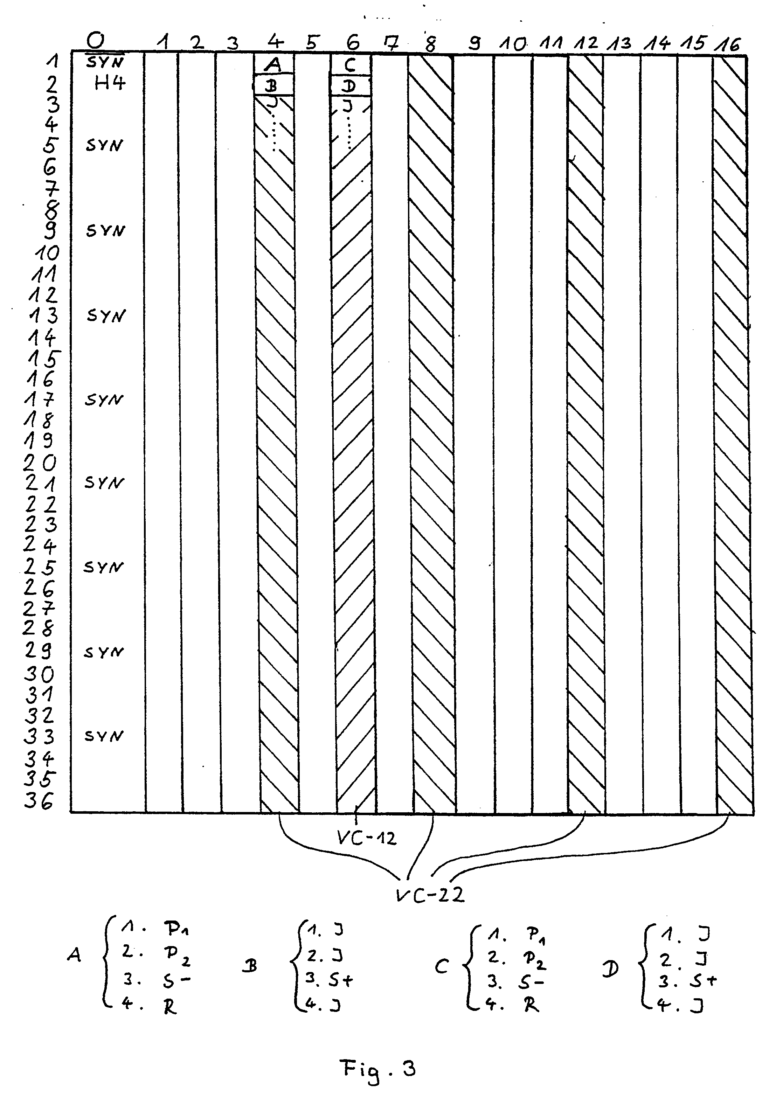

Figur 3 zeigt die Unterbringung zweier Signale der synchronen Hierarchie, des Virtuellen-Containers VC-12 mit 2240 kbit/s und des Virtuellen Containers VC-22 mit 9152 kbit/s. Der Virtuelle Container VC-12 kann in einem beliebigen der 16 Zeitkanäle 1-17 untergebracht werden. Der erste Zeitabschnitt des Zeitkanals A wird im Wechsel mit einem Pointer $P_1$ und $P_2$, einem Zeitplatz zum negativen Stopfen S sowie einem reservierten Zeitplatz R belegt. Der zweite Zeitabschnitt des Zeitkanals B wird mit einem Zeitplatz zum positiven Stopfen S+ sowie drei Informationsbytes I belegt. Dazu wird ein Überrahmen, bestehend aus vier Rahmen entsprechend Fig. 1, gebildet. Der Überrahmen hat also eine Rahmenfrequenz von 2 kHz. Die aktuelle Phasenlage dieses Überrahmens wird mit dem Byte H4 definiert.

Die weiteren Zeitabschnitte der mit dem VC-12 belegten Spalte enthalten Information I. Der Anfang des VC-12 wie auch aller anderen Virtuellen Container kann beliebig zum Rahmenanfang liegen und verschiebt sich aufgrund des Stopfens. Der Virtuelle Container VC-22 wird in vier Zeitkanäle aufgeteilt. Für die beiden ersten Zeitabschnitte des ersten Zeitkanals C und D, in dem der Virtuelle Container VC-22 übertragen wird, gilt dasselbe wie zuvor beim VC-12. Im benutzten Rahmen können gleichzeitig 16 Virtuelle Container vom Typ VC-12 oder 4 vom Typ VC-22 oder beispielsweise gleichzeitig 2 vom Typ VC-22 und 8 vom Typ VC-12 übertragen werden.

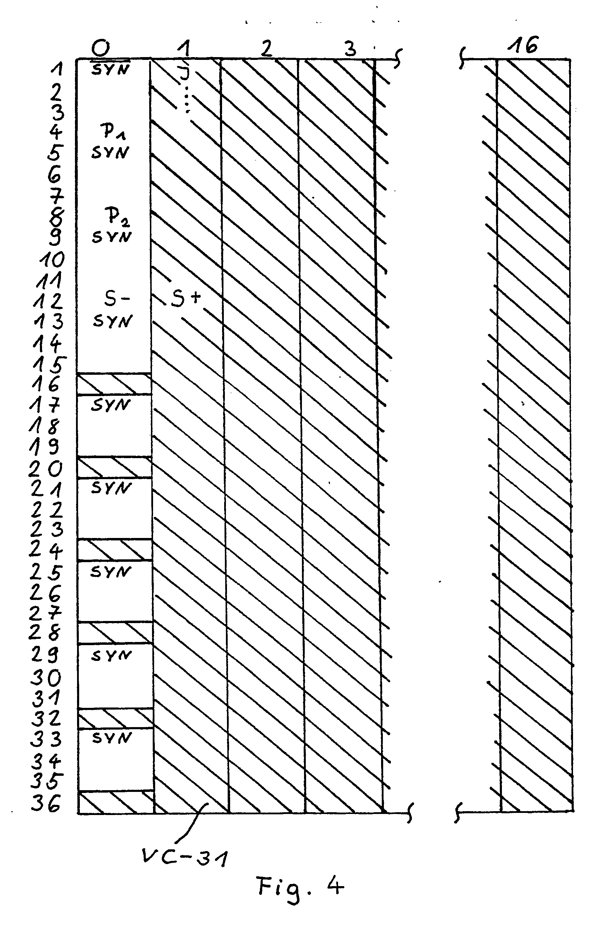

Figur 4 zeigt wie ein Virtueller Container VC-31 im Rahmen des Ausführungsbeispiels untergebracht werden kann. Der Virtuelle Container VC-31 hat eine Datenrate von 37 248 kbit/s. Er nutzt die freie Übertragungskapazität des Rahmens nahezu voll aus. Auch in der ersten Spalte zwischen den Worten zur Rahmensynchronisation sind Informationsbytes untergebracht. Es sind Pointer $P_1$ und $P_2$ und Stopfstellen zum positiven S+ und negativen S- Stopfen vorgesehen. Das zugehörige Koppelfeld wird statisch betrieben.

## Ansprüche

1. Verfahren zur digitalen Nachrichtenübertragung, das zur Übertragung von Signalen unterschiedlicher Hierarchiestufen der Multiplexsysteme der europäischen oder nordamerikanischen asynchronen Hierarchie, sowie zur Übertragung von Signalen der synchronen digitalen Hierarchie geeignet ist, wobei die Signale in byteorientierten Rahmen aus Teilrahmen übertragen werden und die Teilrahmen die gleiche Struktur aufweisen und auf einem Zeitplatz, der in allen Teilrahmen an der gleichen Stelle steht, Overhead enthalten ist und die Teilrahmen mit einer Frequenz von 72 kHz wiederholt werden, wobei ein Rahmen aus 9 Teilrahmen besteht, dadurch gekennzeichnet, daß ein Teilrahmen aus 68 Byte gebildet wird und daß auf genau einem Zeitplatz je Teilrahmen Overhead von einem Byte Länge übertragen wird und daß in einem Rahmen auf zumindest einem für Overhead reservierten Zeitplatz ein Rahmensynchronwort übertragen wird.

2. Verfahren zur digitalen Nachrichtenübertragung, das zur Übertragung von Signalen unterschiedlicher Hierarchiestufen der Multiplexsyteme der europäischen oder nordamerikanischen asynchronen Hierarchie, sowie zur Übertragung von Signalen der synchronen digitalen Hierarchie geeignet ist, wobei die Signale in byteorientierten Teilrahmen übertragen werden und die Teilrahmen die gleiche Struktur aufweisen und auf einem Zeitplatz der in allen Teilrahmen an der gleichen Stelle steht, Overhead enthalten ist und die Teilrahmen mit einer Frequenz von 72 kHz wiederholt werden, dadurch gekennzeichnet, daß die Teilrahmen in Überrahmen angeordnet sind, die aus N • 9 Teilrahmen bestehen, daß ein Teilrahmen aus 68 Byte gebildet wird, daß auf genau einem Zeitplatz in jedem Teilrahmen Overhead von einem Byte-Länge übertragen wird und daß in jedem Überrahmen aus N • 9 Teilrahmen auf zumindest N für Overhead reservierten Zeitplätzen Rahmensynchronworte übertragen werden, die einen Abstand von 611 Byte zueinander aufweisen.

3. Verfahren zur digitalen Nachrichtenübertragung nach Anspruch 1, dadurch gekennzeichnet, daß der verwendete Rahmen aus 17 Zeitkanälen mit je einer Übertragungsrate von 2,304 Mbit/s gebildet wird.

4. Verfahren zur digitalen Nachrichtenübertragung nach Anspruch 2, dadurch gekennzeichnet, daß ein Überrahmen aus N Rahmen aus je 9 Teilrahmen besteht, wobei der Rahmen aus 17 Zeitkanälen mit je einer Übertragungsrate von 2,304 Mbit/s gebildet wird.

5. Verfahren zur digitalen Nachrichtenübertragung nach einem der Ansprüche 1 bis 4, dadurch gekennzeichnet, daß in jedem dritten Teilrahmen als Overhead ein Rahmensynchronwort übertragen wird.

6. Verfahren zur digitalen Nachrichtenübertragung nach einem der Ansprüche 1 bis 4, dadurch gekennzeichnet, daß in jedem Teilrahmen als Overhead ein Rahmensynchronwort übertragen wird.

Fig. 1

| D [Kbit/s] | S | Z |
|---|---|---|
| 1544 | 1 | 1 |
| 2048 | 1 | 1 |
| 1728 | 1 | 1 |
| 2304 | 1 | 1 |
| 6312 | 1 | 3 |
| 8448 | 1 | 4 |
| 6912 | 1 | 3 |
| 9216 | 1 | 4 |
| 44736 | 2 | st |
| 34368 | 1 | st |
| 49152 | 2 | st |
| 37440 | 1 | st |
| 139264 | 4 | st |
| 150912 | 4 | st |

Fig. 2

Fig. 3

Fig. 4